# EUROPÄISCHE PATENTSCHRIFT

(11) **EP 0 432 859 B1**
(45) Veröffentlichungstag und Bekanntmachung des Hinweises auf die Patenterteilung: **13.10.1993**
(21) Anmeldenummer: 90250295.4
(22) Anmeldetag: 28.11.1990
(51) Int. Cl.: H02B 11/04

(54) **Kontaktvorrichtung zur lösbaren Aufnahme von Trennkontaktstücken eines mehrpoligen Schaltgerätes**
Contact device for detachably receiving multipole switchgear break contacts
Dispositif de contact apte à recevoir des contacts de coupure amovibles d'un appareil de commutation multipolaire

(30) Priorität: 15.12.1989 DE 3941962
(43) Veröffentlichungstag der Anmeldung: 19.06.1991
(73) Patentinhaber: SIEMENS AKTIENGESELLSCHAFT, 80333 München (DE)
(72) Erfinder: Manthe, Karl-Heinz, W-1000 Berlin 20 (DE); Pfeiffer, Bernhard, Dr., W-1000 Berlin 49 (DE)

(56) Entgegenhaltungen:
- EP-A- 0 056 558
- EP-A- 0 069 045
- EP-A- 0 227 585
- DE-A- 2 165 940

## Beschreibung

Die Erfindung befaßt sich mit einer Kontaktvorrichtung zur lösbaren Aufnahme von Trennkontaktstücken der Hauptstrombahnen eines mehrpoligen Schaltgerätes, wobei jedem Trennkontaktstück des Schaltgerätes ein ortsfestes Kontaktmodul, bestehend aus einem Isolierstoffgehäuse und wenigstens einem Gegenkontaktstück, zugeordnet und diese Kontaktmodule an einer Tragplatte befestigt sind.

Eine Kontaktvorrichtung dieser Art ist durch die US-A-3 663 773 bekannt geworden. Die Kontaktmodule sind bei der bekannten Vorrichtung entsprechend der Polzahl des Schaltgerätes jeweils für die Eingangsseite und die Ausgangsseite des Schaltgerätes in einer Reihe ohne gegenseitigen Abstand montiert. Es wäre jedoch denkbar, die Kontaktmodule mit gegenseitigem Abstand zu montieren, wenn sie in Verbindung mit einem Schaltgerät verwendet werden sollen, dessen Pole einen entsprechenden Abstand besitzen. Ebenso könnte der Abstand der beiden Reihen von Kontaktmodulen vergrößert oder verkleinert werden, wenn die Trennkontaktstücke des Schaltgerätes für die Eingangsseite und die Ausgangsseite einen entsprechenden kleineren oder größeren Abstand aufweisen.

Schaltgeräte, beispielsweise Niederspannungs-Leistungsschalter kompakter Bauart mit Isolierstoffgehäuse, werden in Baureihen für bestimmte Nennströme hergestellt, die sich durch die Größe der Gehäuse, die Polzahl und den Abstand der Anschlußstellen unterscheiden. Der Erfindung liegt in diesem Zusammenhang die Aufgabe zugrunde, eine Kontaktvorrichtung der eingangs genannten Art so auszubilden, daß bei äußerlich unveränderten Abmessungen der Kontaktmodule mit möglichst geringem Aufwand eine Anpassung an den jeweils vorliegenden Nennstrom vorgenommen werden kann. Im Zusammenhang hiermit soll auch die Montage der Module möglichst einfach sein.

Gemäß der Erfindung wird diese Aufgabe dadurch gelöst, daß zur Verbindung der schalterseitigen Trennkontaktstücke und ortsfester Anschlußstücke in dem Isolierstoffgehäuse jedes Kontaktmoduls paarweise einander gegenüberstehend angeordnete brückenartige Kontaktlamellen in einer dem zu übertragenden Strom angepaßten Anzahl vorgesehen sind und daß ein verbleibender Leerraum durch ein die Kontaktlamellen abstützendes Füllstück ausgefüllt ist. Dies Gestaltung ist sowohl anwendbar, wenn die Kontaktlamellen quer zur Bewegungsrichtung des Schaltgerätes beim Schließen und Trennen der Kontaktvorrichtung oder in derselben Richtung angeordnet sind. Der Einbau einer jeweils dem Nennstrom angepaßten Anzahl von Kontaktlamellen in die Kontaktmodule führt nicht nur zu einer Ersparnis an Leitungs- und Kontaktwerkstoffen an den Kontaktmodulen, sondern auch an den Trennkontaktstücken der Schaltgeräte, die nun einen der Anzahl der Kontaktlamellen angepaßten Querschnitt erhalten können. Ebenso läßt sich ein an dem Kontaktmodul anzubringendes ortsfestes Anschlußstück bemessen, mit dem ein weiterführender Leiter verbunden werden kann. Vorteilhaft ist ferner, daß innerhalb des für die Kontaktlamellen vorgesehenen Einbauraumes die Kontaktlamellen mit Hilfe eines oder auch mehrerer Füllstücke in einer gewünschten Stellung derart montiert werden können, daß sich eine günstige Lage der Eingriffstelle der Trennkontaktstücke des Schaltgerätes mit den Kontaktlamellen ergibt.

An sich ist es bereits bekannt, bei Trennkontaktvorrichtungen für verfahrbare Leistungsschalter in einem Isolierrahmen von einheitlicher Größe Kontaktstücke in unterschiedlicher Anzahl vorzusehen, um eine Anpassung an den jeweiligen Nennstrom zu bewirken (US-A-4 205 207). Jedoch sind hierbei nicht Kontaktmodule der vorstehend betrachteten Art, sondern für benachbarte Trennkontaktstücke gemeinsame, d. h. mehrpolige Einheiten vorgesehen. Ferner erfordert diese Anordnung für jeden Nennstrom individuell angepaßte Leiterstücke und ist nur für drei Stromstärken ausführbar. Dadurch ergeben sich gegenüber der Anordnung nach der Erfindung erhebliche Einschränkungen.

Paarweise einander gegenüberstehend angeordnete Kontaktlamellen sind bei Kontaktvorrichtungen für mehrpolige Schaltgeräte an sich bekannt (DE-A-31 26 306, DE-A-31 01 532). Die Ausnahmevorrichtungen für Trennkontaktstücke des Schaltgerätes sind hierbei jedoch Bestandteil mehrpoliger Einheiten.

Eine Gefährdung der Kontaktvorrichtung durch zu starke Erwärmung könnte dadurch entstehen, daß ein für einen bestimmten Nennstrom bemessenes Schaltgerät mit Kontaktmodulen in Eingriff gebracht wird, die für einen geringeren Nennstrom vorgesehen sind. Diese Gefährdung kann dadurch beseitigt werden, daß die Kontaktlamellen mit ihrer Längserstreckung in der Betätigungsrichtung der Kontaktvorrichtung angeordet sind und daß das Füllstück mit der dem Schaltgerät zugewandten Seite der Kontaktlamellen wenigstens bündig derart ausgebildet ist, daß die Einführung eines breiteren als der Anzahl von Kontaktlamellen angepaßten Trennkontaktstückes verhindert ist.

Ein vorteilhaft einfacher Einbau aller für einen Kontaktmodul benötigten Leitungsteile läßt sich dadurch erreichen, daß das Isolierstoffgehäuse des Kontaktmoduls aus einem an drei aneinandergrenzenden Seiten offenen kastenförmigen Gehäusekörper und einem dessen die Öffnungen begrenzenden Seitenwände übergreifenden Endstück besteht. Auf diese Weise steht zunächst eine Öffnung zum Einbringen der Kontaktlamellen und ihrer Federn zur Verfügung. Mittels der Öffnung einer angrenzenden Gehäuseseite läßt sich nun beispielsweise ein Anschlußstück für weiterführende Leiter zwischen die Kontaktlamellen einführen. Die dritte Öffnung dient dann zum späteren Einführen eines Trennkontaktstückes des zugehörigen Schaltgerätes und bleibt daher zunächst frei. Das Endstück überdeckt die Öffnungen derart, daß die Kontaktlamellen und gegebenenfalls das Anschlußstück gegen Entfernung gesichert sind. Durch die übergreifende Gestaltung des Endstückes wird erreicht, daß die Seitenwände des kastenförmigen Gehäusekörpers gegenüber dem Druck abgestützt sind, den die Federn ausüben, die den Kontaktlamellen zugeordnet sind.

Das Isolierstoffgehäuse jedes Kontaktmoduls kann an seiner zur Auflage auf der Tragplatte vorgesehenen Seite einen Schutzkragen besitzen und die Tragplatte kann mit einem dem Schutzkragen angepaßten Ausschnitt versehen sein. Der Schutzkragen bildet hierbei eine isolierende Durchführung für ein Anschlußstück der erwähnten Art. Auf diese Weise können ausreichend lange Kriechstrecken geschaffen werden, um einen Überschlag zwischen einem Anschlußleiter und der im allgemeinen aus leitendem Werkstoff bestehenden und geerdeten Tragplatte zu verhindern.

Der Schutzkragen kann einstückig mit dem Isolierstoffgehäuse des Kontaktmoduls bzw. einstückig mit den Teilstücken seines Gehäuses hergestellt sein. Dies kann in vorteilhafter Weise dadurch geschehen, daß der Schutzkragen durch ein U-förmiges Kragenteilstück des kastenförmigen Gehäusekörpers und einen die offene Seite des Kragenteilstückes abschließenden Wandteil des Endstückes gebildet sein.

Häufig wird für den Aufbau einer Schaltanlage eine Anordnung geeignet sein, bei der die Trennkontaktstücke eines Schaltgerätes, Kontaktmodule und die aus diesen herausragenden Anschlußstücke jeweils eines geradlinigen Leitungszug bilden. Jedoch gibt es Anwendungsfälle, bei denen ein rechtwinklig abgeknickter Leitungszug günstiger ist. Nach einer Ausgestaltung der Erfindung kann hierzu das Isolierstoffgehäuse des Kontaktmoduls eine seitliche Öffnung zum Einführen eines sich quer zur Betätigungsrichtung des Kontaktvorrichtung erstreckenden Anschlußstückes besitzen und es kann ein Riegelstück vorgesehen sein, das durch den Schutzkragen einführbar ist und mit einem Vorsprung in das Anschlußstück und mit wenigstens einem weiteren Vorsprung in den Gehäusekörpers des Isolierstoffgehäuses derart eingreifend ausgebildet ist, daß bei aufgesetztem Endstück des Isolierstoffgehäuses eine Verschiebung des Anschlußstückes gegenüber dem Riegelstück und eine Verschiebung des Riegelstückes gegenüber dem Isolierstoffgehäuse gesperrt ist. In Verbindung mit einem Gehäusekörper mit seitlicher Öffnung sind somit Anschlußstücke beider Ausführungsarten verwendbar.

Bei der eingangs erwähnten bekannten Anordnung werden die Kontaktmodule an ihrer Tragplatte durch mehrere Befestigungselemente befestigt. Dies steht einer raschen Montage entgegen. Im Rahmen der Erfindung ist eine Beschleunigung dadurch zu erreichen, daß der Kontaktmodul an seiner zur Auflage auf der Tragplatte bestimmten Seite wenigstens eine Ausnehmung zum Übergreifen einer Kante der Tragplatte besitzt. Auf diese Weise lassen sich die Kontaktmodule durch Einhaken an der Tragplatte derart befestigen, daß nur noch an der gegenüberliegenden Seite ein zusätzliches Befestigungselement benötigt wird. Hierzu kann eine geeignete Öffnung an dem Isolierstoffgehäuse vorgesehen sein.

Um ohne besondere Justierarbeiten eine einheitliche Stellung der Kontaktmodule gegenüber der zugehörigen Tragplatte zu gewährleisten, empfiehlt es sich, am Übergang zwischen dem Isolierstoffgehäuse und dem Schutzkragen eine zur Abstützung des Kontaktmoduls auf der Tragplatte dienende Absatzfläche vorzusehen. Diese ist auch günstig für die Benutzung der erwähnten Ausnehmung beim Einhaken des Kontaktmoduls an der Tragplatte, weil nun der Kontaktmodul auf die Tragplatte aufgesetzt und das Eingreifen durch Verschiebung des Kontaktmoduls parallel zu der Tragplatte bewirkt werden kann. In diesem Zusammenhang ist eine weitere Vereinfachung der Befestigung des Kontaktmoduls an der Tragplatte dadurch zu erreichen, daß an der Ausnehmung gegenüberliegenden Seite des Isolierstoffgehäuses wenigstens ein Vorsprung angeordnet ist, der in Verbindung mit einer von dem Vorsprung zu übergreifenden weiteren Kante der Tragplatte durch eine Verschiebung eine Verriegelung des Kontaktmoduls gegen Abnahme von der Tragplatte gestattet und daß ein Sperrglied gegen eine entgegengesetzte Verschiebung des Kontaktmoduls, d. h. im Sinne der Lösung von der Tragplatte, vorgesehen ist.

Als ein solches Sperrglied eignet sich beispielsweise eine freigeschnittene und biegbare Zunge der aus Blech bestehenden Tragplatte. Ferner kann insbesondere bei Anordnungen mit geringem Abstand der einander gegenüberstehenden Kontaktmodule die Richtung der zur Verriegelung an der Tragplatte vorgesehenen Verschiebung gegenläufig im Sinne der Vergrößerung des Abstandes zwischen den Kontaktmodulen gewählt sein, wobei als Sperrglied ein zwischen die Kontaktmodule einzubringendes Stützglied dient. Dieses bedarf lediglich einer ganz einfachen Befestigung, um seine Entfernung zu verhindern, da die Sperrwirkung durch das örtliche oder ganze Ausfüllen des Zwischenraumes zwischen den Kontaktmodulen zustande kommt.

Bei allen Ausführungsformen der Erfindung kann die Tragplatte auch durch ein ortsfestes Tragorgan eines Schaltschrankes oder einer Schaltanlage gebildet sein. Beispielsweise kann dieses Tragorgan die Rückwand eines Einschubraumes sein.

Wie bereits erwähnt, entsteht bei der Anwendung von Trennkontaktvorrichtungen im Normalfall ein gradliniger Leitungszug vom Schaltgerät über den Kontaktmodul bis zum Anschlußstück, wobei Trennkontaktstück und Klemmstelle des Anschlußstückes in derselben oder parallelen Ebene liegen. Es kann jedoch erwünscht sein, daß die Ebenen des Trennkontaktstückes des Schaltgerätes und der Klemmstelle des Anschlußstückes um 90° gegeneinander verdreht sind, weil auf diese Weise in manchen Schaltanlagen die Verbindung mit weiterführenden Stromschienen oder Sammelschienen leichter herstellbar ist. Nach einer weiteren Ausgestaltung der Erfindung kann hierzu jedes Anschlußstück einen zum Eingreifen zwischen die Kontaktlamellen von vorgesehenen Kontaktteil und einen diesem gegenüber um 90° gedrehten Klemmteil besitzen und zwischen dem Kontaktteil und dem Klemmteil des Anschlußstückes kann ein eingeschnürter Übergangsbereich vorgesehen sein, derart, daß nach Einführung des Klemmteiles durch die Durchbrechung der Tragplatte eine Drehung des Kontaktmoduls um 90° vornehmbar ist. Somit kann eine Tragplatte einheitlicher Ausführung mit rechteckigen Durchbrüchen sowohl mit üblichen geraden Anschlußstücken als auch in Verbindung mit in sich gedrehten Anschlußstücken verwendet werden.

Die Erfindung wird im folgenden anhand der in den Figuren dargestellten Ausführungsbeispiele näher erläutert.

Die Figur 1 zeigt in einer Seitenansicht einen Niederspannungs-Leistungsschalter kompakter Bauart sowie eine als Stecksockel ausgebildete Kontaktvorrichtung.

In der Figur 2 ist der Stecksockel gemäß der Figur 1 mit abgenommenen Leistungsschalter in der Draufsicht dargestellt.

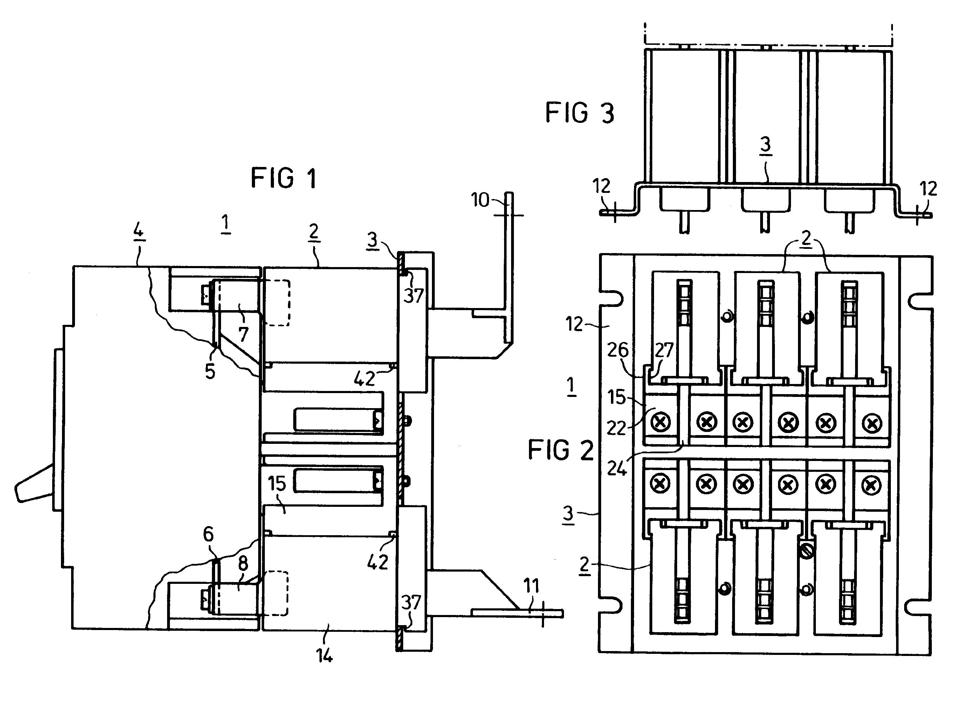

Eine weitere Seitenansicht des Stecksockels gemäß der Figur 1 zeigt die Figur 3.

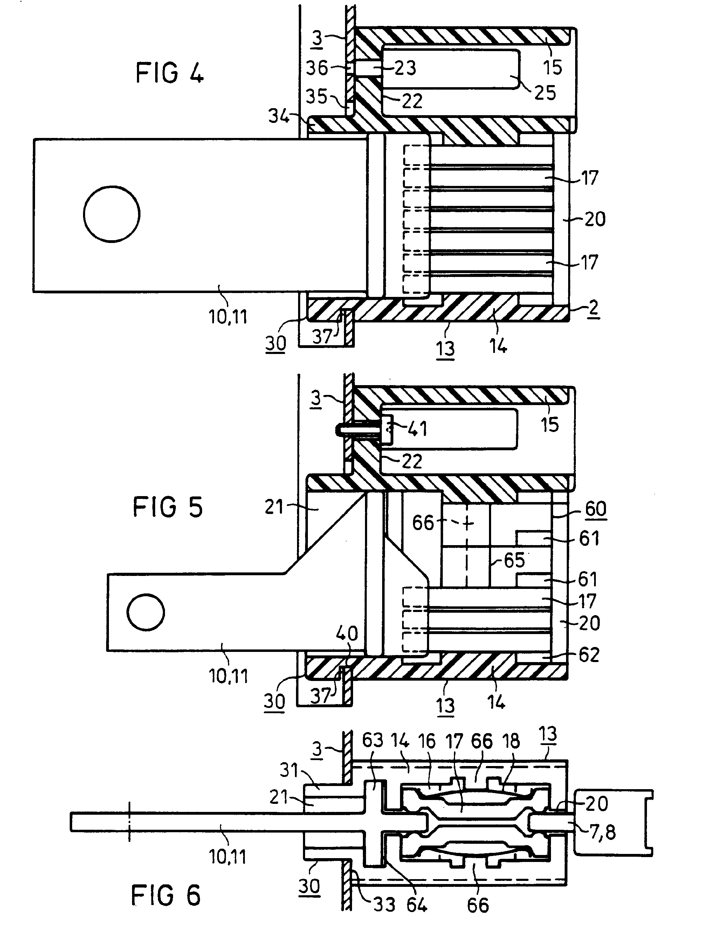

Die Figur 4 zeigt einen der Kontaktmodule des Stecksockels gemäß den Figuren 1 bis 3 im Schnitt in einer Bemessung für den höchsten, den Abmessungen des Kontaktmoduls entsprechenden Nennstrom. In der gleichen Darstellung zeigt die Figur 5 den Kontaktmodul in einer Bemessung für einen geringeren Nennstrom.

In der Figur 6 ist ein Kontaktmodul gemäß der Figur 4 in geöffnetem Zustand nach Entfernung eines Endstückes gezeigt.

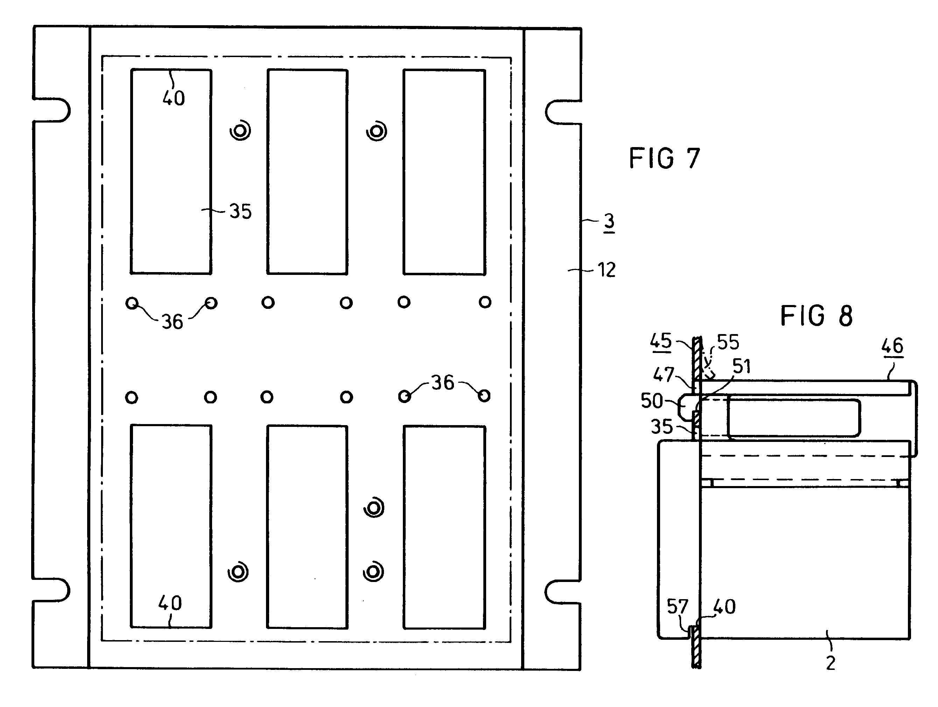

Eine Tragplatte zur Aufnahme von insgesamt sechs Kontaktmodulen zeigt die Figur 7 in der Draufsicht.

In der Figur 8 ist in einer Seitenansicht eine weitere Ausführungsform eines Kontaktmoduls gezeigt, der durch eine Verschiebung auf einer im Schnitt gezeigten Tragplatte an dieser zu befestigen ist.

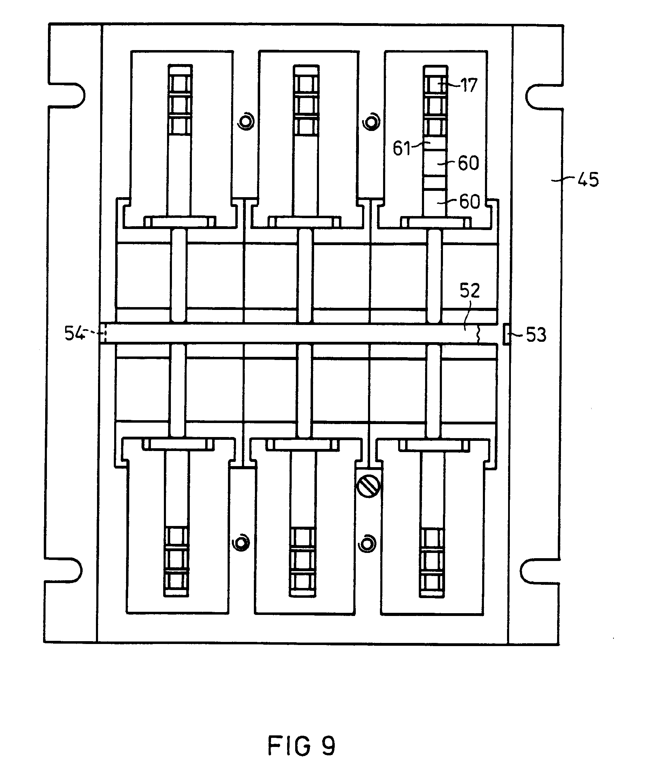

Ein in Verbindung mit Kontaktlamellen gemäß der Figur 8 verwendbares Stützglied zeigt die Figur 9.

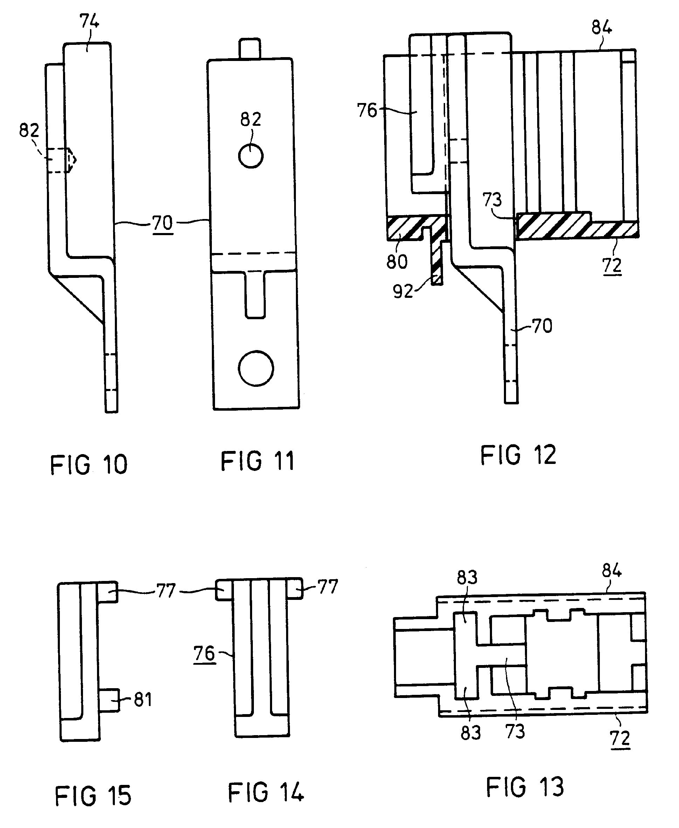

Die Figuren 10 und 11 zeigen in zwei um 90° gedrehten Ansichten ein Anschlußstück, das zur Anbringung in einer quer zur Betätigungsrichtung der Kontaktvorrichtung verlaufenden Stellung vorgesehen ist.

Die Figur 12 zeigt einen Gehäusekörper eines Kontaktmoduls mit einem Anschlußstück gemäß den Figuren 10 und 11 zusammen mit einem Riegelstück in einer Zwischenstellung bei der Montage.

In der Figur 13 ist ein Gehäusekörper des Isolierstoffgehäuses eines Kontaktmoduls mit einer seitlichen Öffnung zum Einführen eines Anschlußstückes gemäß den Figuren 10 und 11 dargestellt.

Die Figuren 14 und 15 zeigen ein Riegelstück in zwei um 90° gegeneinander gedrehten Ansichten.

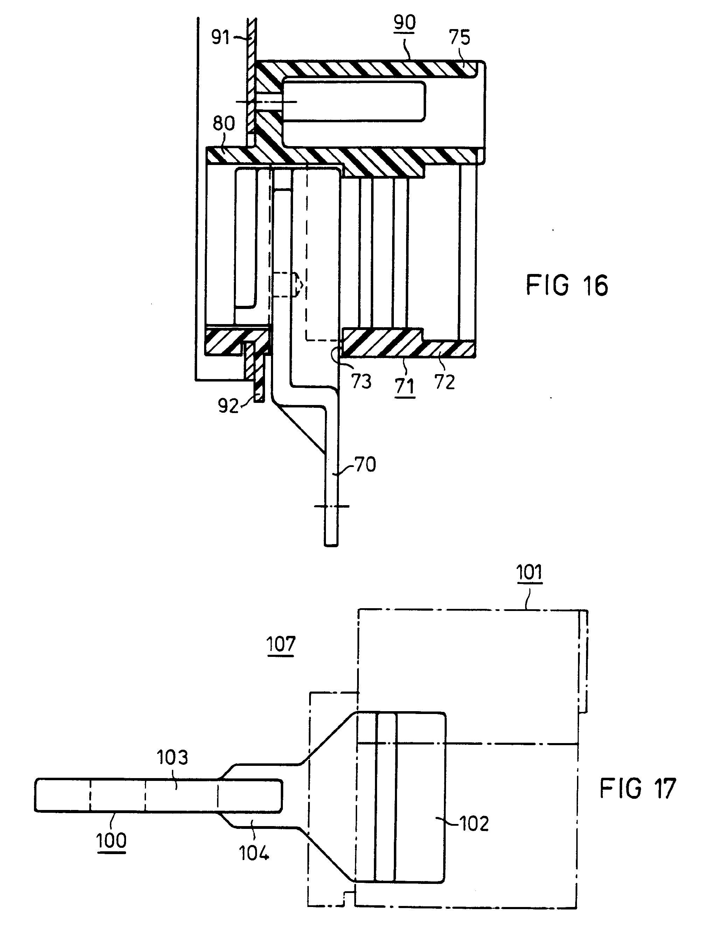

Die Figur 16 zeigt im Schnitt einen vollständigen Kontaktmodul mit einem Isolierstoffgehäuse und einem sich seitlich ersteckenden Anschlußstück gemäß den Figuren 10 und 11 zusammen mit einer Tragplatte.

In der Figur 17 ist ein Anschlußstück mit einem Kontaktteil zum Eingreifen zwischen Kontaktlamellen eines Kontaktmoduls und einem um 90° gegenüber dem Kontaktteil gedreht angeordneten Klemmteil gezeigt. Ein Isolierstoffgehäuse des Kontaktmoduls ist gestrichtelt angedeutet.

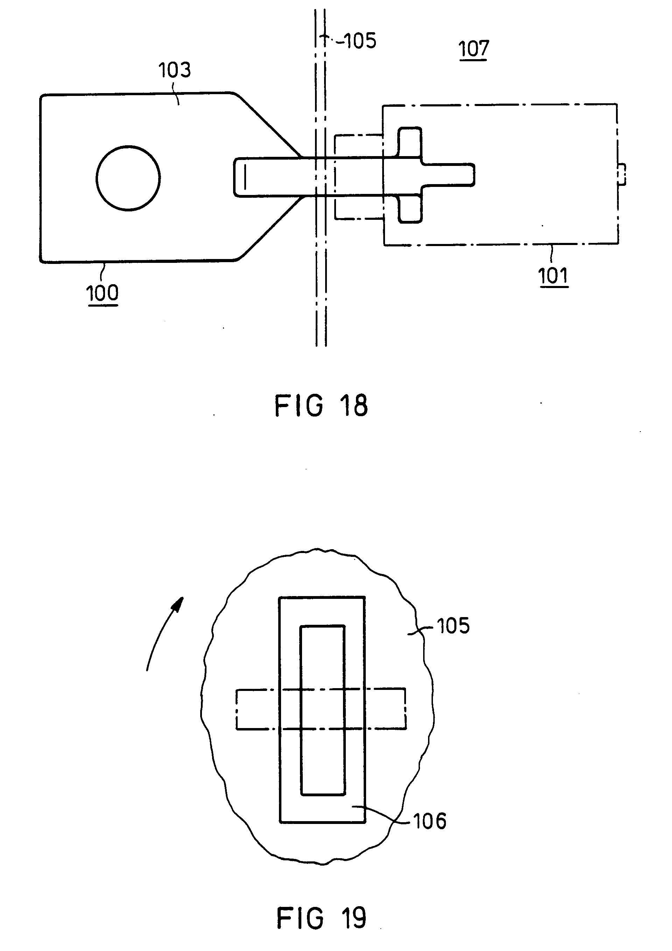

Die Figur 18 zeigt die Teile gemäß der Figur 17 in Verbindung mit einer gleichfalls gestrichelt angedeuteten Tragplatte in einer um 90° gedrehten Ansicht.

In der Figur 19 ist eine Drehbewegung des Anschlußstückes gemäß den Figuren 17 und 18 während der Montage veranschaulicht.

In der Figur 1 ist eine mehrpolige Kontaktvorrichtung 1 gezeigt, die aus Kontaktmodulen 2 und einer diese aufnehmenden, im Schnitt dargestellten Tragplatte 3 besteht. Auf die Kontaktvorrichtung 1 ist ein Niederspannungs-Leistungsschalter kompakter Bauart mit Isolierstoffgehäuse und Kipphebelbetätigung 4 aufgesetzt. Die der Kontaktvorrichtung 1 zugewandte Seite des Leistungsschalters 4 ist in den Eckbereichen aufgebrochen dargestellt, um innere Anschlußschienen 5 und 6 sowie an diesen befestigte messerartige Trennkontaktstücke 7 und 8 zu zeigen. Ferner zeigt die Figur 1 an der Rückseite der Kontaktvorrichtung 1 Anschlußstücke 10 und 11, die zur festen Verbindung der Kontaktvorrichtung mit dem durch den Leistungsschalter 4 zu schützenden Stromkreis vorgesehen sind.

Wie der Figur 2 zu entnehmen ist, in der die Kontaktvorrichtung 1 in der Draufsicht auf die zum Einführen der Trennkontaktstücke 7 und 8 vorgesehene Seite gezeigt ist, sind insgesamt sechs Kontaktmodule 2 vorhanden, die entsprechend der Anordnung der Trennkontaktstücke 7 und 8 in zwei parallelen Reihen zu je drei Kontaktmodulen für die Eingangsseite und für die Ausgangsseite des Leistungsschalters 4 angeordnet sind. Die Tragplatte 3 ist sockelartig gestaltet und weist, wie insbesondere der Figur 3 zu entnehmen ist, zwei durch doppelte Abwinklungen gebildete und zur Befestigung dienende Fußleisten 12 auf.

Der Aufbau der Kontaktmodule 2 wird im folgenden näher anhand der Figuren 4, 5 und 6 erläutert.

Der Kontaktmodul 2 weist ein Isolierstoffgehäuse 13 auf, welches aus einem kastenförmigen Gehäusekörper 14 und einem Endstück 15 gebildet ist. Der Gehäusekörper 13 ist an drei aneinandergrenzenden Seiten mit Öffnungen versehen, und zwar mit einer in der Figur 6 (bei abgenommenem Endstück 15) sichtbaren Öffnung 16, durch die Kontaktlamellen 17 und diese gegeneinander vorspannende Blattfeder 18 eingebracht werden können; ferner mit einer Öffnung 20 zum Einführen eines Trennkontaktstückes 7 bzw. 8 (Figur 6) und einer der Öffnung 20 gegenüberliegende Öffnung 21 zur Einführung des Anschlußstückes 10 bzw. 11. Die Öffnungen 16, 20 und 21 werden durch das Endstück 15 gemäß den Figuren 4 und 5 verschlossen. Durch die gegensinnige Schraffur des Gehäusekörpers 14 und des Endstückes 15 ist auf die Zweiteilung des Isolierstoffgehäuses 13 hingewiesen.

Wie insbesondere der Figur 2 zu entnehmen ist, weisen die Endstücke 15 ein etwa H-förmiges Profil auf und besitzen ein Bodenteil 22, das zur Auflage auf der Tragplatte 3 bestimmt ist und eine Durchgangsöffnung 23 (Figur 4) besitzt. Die rechtwinklig zu dem Bodenteil 22 stehende Mittelwand 24 des H-Profils (Figur 2) ist gemäß den Figuren 4 und 5 mit einem Langloch 25 versehen, das zum Einhängen eines Vorhängeschlosses dient, um im Bedarfsfall die Kontaktvorrichtung 2 gegen das Aufsetzen des Leistungsschalters 4 sichern zu können. Seitenwände 26 des Endstückes 14 übergreifen beidseitig des Gehäusekörpers 14 angeordnete Randstege 27 (Figur 2) derart, daß die Seitenwände 26 des Gehäusekörpers 14 gegen die Kraft der Blattfedern 18 abgestützt werden und beide Gehäuseteile nur durch eine gegenseitige parallele Verschiebung voneinander zu trennen sind. Sinngemäß sind der Gehäusekörper 14 und das Endstück 15 durch eine gegenseitige Verschiebung miteinander zu verbinden. Ein Vorsprung 42 (Figur 1) begrenzt diese Verschiebung bis zur Bündigstellung der Gehäuseteile.

An seiner der Tragplatte 3 zugewandten Seite besitzt der Kontaktmodul 2 einen Schutzkragen 30, der durch zusammenwirkende Abschnitte des Gehäusekörpers 14 und des Endstückes 15 gebildet ist. Der Gehäusekörper 14 weist ein U-förmiges Kragenteilstück 31 auf, dessen Längsseiten 32 gegenüber der Breite des Gehäusekörpers 14 unter Bildung von Absatzflächen 33 nach innen zurückgesetzt sind. Mit diesen Absatzflächen 33 ruht der Kontaktmodul 2 auf der Tragplatte 3. Das Kragenteilstück 31 wird durch einen vorspringenden Wandteil 34 des Endstückes 15 zu dem Schutzkragen 30 vervollständigt. Wie insbesondere die Figuren 4, 5 und 6 zeigen, umschließt der Schutzkragen 30 das Anschlußstück 10 bzw. 11 nach der Art einer Durchführung derart, daß ein ausreichender Kriechweg von dem Anschlußstück 10 bzw. 11 zu der aus Blech bestehenden und geerdeten Tragplatte 3 geschaffen wird.

Zur Verwendung in Verbindung mit einem dreipoligen Leistungsschalter 4 wird eine Kontaktvorrichtung mit sechs Kontaktmodulen 2 benötigt. Zu ihrer Aufnahme und Befestigung ist die Tragplatte 3 gemäß der Figur 7 mit insgesamt sechs entsprechend angeordneten rechteckigen Durchbrechungen 35 versehen. Nahe den einander zugewandten Schmalseiten der Durchbrechungen 35 befinden sich je zwei Löcher 36 zur Aufnahme von Befestigungsschrauben für die Kontaktmodule 2. Diese können mittels einer Ausnehmung 37 (Figuren 1, 4 und 5), die sich am Übergang zwischen dem Gehäusekörper 14 und dem Kragenteilstück 31 befindet, in der Weise gesichert werden, daß der Kontaktmodul 2 auf der Oberfläche der Tragplatte 3 verschoben wird, nachdem der Schutzkragen 34 in die Durchtrittsöffnung 35 eingeführt und die Absatzflächen 33 zur Auflage auf der Tragplatte 3 gelangt sind. Es ergibt sich dann die Stellung gemäß den Figuren 4 und 5. Sobald das Isolierstoffgehäuse 13 die den Löchern 36 gegenüberliegende Kante 40 der Durchtrittsöffnung 35 übergreift, fluchten die Löcher 36 der Tragplatte 3 und die Öffnungen 23 im Bodenteil 22 des Endstückes 15 miteinander, so daß eine Befestigungsschraube 41 (Figur 2, Figur 5) eingedreht werden kann. Da das Endstück 15 im Bereich beider Seitenwände des Gehäusekörpers 14 an dem Vorsprung 42 (Figur 1) anliegt, wird durch die Befestigungsschrauben nicht nur das Endstück 15, sondern auch der Gehäusekörper 14 an der Tragplatte 3 festgehalten.

Zur weiteren Vereinfachung der Befestigung der Kontaktmodule an der Tragplatte ist gemäß der Figur 8 eine modifizierte Tragplatte 45 sowie ein modifiziertes Endstück 46 des Kontaktmoduls 2 vorgesehen. Die Tragplatte 45 unterscheidet sich von der Tragplatte 3 gemäß der Figur 7 durch eine in der Figur 8 gezeigten weitere Durchbrechung 47, die mit einem hakenartigen Vorsprung 50 des Endstückes 46 zusammenwirkt. Die Befestigung des Kontaktmoduls 2 erfolgt unter Verwendung der Komponenten gemäß der Figur 8 in der Weise, daß zunächst der Kontaktmodul 2 auf die Tragplatte 45 aufgesetzt wird, wobei der Schutzkragen durch die Durchbrechung 35 und der hakenartige Vorsprung 50 durch die weitere Durchbrechung 47 hindurchragt. Bei der Verschiebung des Kontaktmoduls 2 entlang der Oberfläche der Tragplatte 45 gelangt nun nicht nur die Ausnehmung 37 in Eingriff mit der Kante 40 der Tragplatte 45, sondern auch der hakenartige Vorsprung 50 mit einer entsprechenden Kante 51 des Durchbruches 47. Für die endgültige Befestigung des Kontaktmoduls 2 ist es nun ausreichend, eine Verschiebung in der entgegengesetzten Richtung zu verhindern. Dies kann gemäß der Figur 9 in der Weise geschehen, daß zwischen die einander mit geringem Abstand gegenüberstehenden Kontaktmodule 2 ein leistenförmiges Stützglied 52 eingelegt wird, welches nun die Verschiebung der Kontaktmodule 2 in Richtung aufeinander und damit im Sinne der Lösung der Vorsprünge von den Kanten der Durchbrüche der Tragplatte 45 verhindert. Das Stützglied kann seinerseits schraubenlos gesichert werden, indem beispielsweise an gegenüberliegenden Seiten der Tragplatte 45 Durchstecköffnungen 53 für abgewinkelte Enden 54 des Stützgliedes 52 vorgesehen werden. Die nach innen ragenden Enden des Stützgliedes 52 bedürfen dann nur noch einer Biegung, um das Stützglied gegen Entfernung zu sichern.

Falls der Abstand zwischen den einander gegenüberstehenden Reihen von Kontaktmodulen größer ist als er in der Figuren 2 und 9 gezeigt ist, empfiehlt es sich, anstelle des schienenartigen Stützglied 52 aus der Ebene der Tragplatte 45 (Figur 8) hochbiegbare freigeschnittene Zungen 55 vorzusehen, die in der Figur 8 gestrichelt angedeutet sind.

Wie bereits erwähnt, dienen der Stromleitung zwischen dem Leistungsschalter 4 und einem durch diesen zu schützenden Stromkreis die in der Figur 4 gezeigten Trennkontaktstücke 7 und 8, die in den Kontaktmodulen enthaltenen brückenartigen Kontaktlamellen 17 und Anschlußstücke 10 bzw. 11. Diese Elemente werden, jedoch in unterschiedlicher Dimmensionierung bzw. unterschiedlicher Anzahl für alle vorkommenden Baugrößen einer Baureihe von Leistungsschaltern 4 verwendet. Die äußeren Abmessungen der Kontaktmodule 2 sind hierbei unverändert. Je nach der Höhe des zu beherrschenden Nennstromes ist jedoch eine unterschiedliche Anzahl von Paaren von Kontaktlamellen 17 vorgesehen, die sich in der Richtung der Bewegung beim Aufsetzen des Leistungsschalters 4 auf die Kontaktvorrichtung erstrecken. In der Figur 4 ist hierzu eine Bestückung mit sieben Paaren von Kontaktlamellen 17 gezeigt, die den Innenraum des Isolierstoffgehäuses 13 vollständig ausfüllen. Dementsprechend wird ein Anschlußstück verwendet, das der Breite dieses Blockes von Kontaktlamellen wenigstens entspricht oder gemäß der Figur 4 etwas breiter als der Block von Kontaktlamellen ausgeführt ist.

Demgegenüber ist der Kontaktmodul in der Ausführung gemäß der Figur 5 für einen geringeren Nennstrom bemessen und enthält dementsprechend nur drei Paare von Kontaktlamellen 17. Der verbleibende Raum in dem Isolierstoffgehäuse 13 wird durch zwei gleiche Füllstücke 60 ausgefüllt, die zweckmäßig aus einem Isolierstoff bestehen können. Durch eine einseitige Ausnehmung 61 des Füllstückes 60 ist dafür gesorgt, daß zwar das Füllstück im mittleren Teil an den Kontaktlamellen 17 anliegt, jedoch im Bereich der Einführungsöffnung für das Trennkontaktstück des Leistungsschalters ein Raum für einen seitlichen Überstand des Trennkontaktstückes in ähnlicher Weise gebildet ist, wie er nahe der Wandung des Gehäusekörpers 14 durch einen Absatz 62 gebildet ist. Durch eine Abrundung oder geringfügige Schrägung der Vorderkanten der Trennkontaktstücke kann dafür gesorgt sein, daß nur mäßige Kräfte beim Aufsetzen des Leistungsschalters 4 auf die Kontaktvorrichtung 1 zu überwinden sind. Jedoch kann in in bekannter Weise auch durch eine winklige Gestalt der Vorderkanten der Trennkontaktstücke erreicht werden, daß die Trennkontaktstücke mit den Paaren von Kontaktlamellen nacheinander in Eingriff gelangen.

Wie die Figur 5 zeigt, sind die Füllstücke 60 entsprechend dem Raumbedarf von zwei Paaren von Kontaktlamellen 17 bemessen. Daher kann durch Verwendung nur eines Füllstückes 16 eine Ausführung mit fünf Paaren von Kontaktlamellen bereitgestellt werden. Ebenso ist es möglich, durch Verwendung von Kontaktlamellen, die jeweils dem Raumbedarf eines Paares von Kontaktlamellen entsprechen, Kontaktmodule in noch feinerer Anpassung an gewünschte Nennströme herzustellen.

Dadurch, daß die Füllstücke wenigstens bündig mit den Enden der Kontaktlamellen abschließend angeordnet sind, kann kein breiteres Trennkontaktstück eingeführt werden, als es der Stromtragfähigkeit der vorhandenen Kontaktlamellen entspricht. Hierdurch ist ein Schutz gegen eine zu starke Erwärmung oder Zerstörung der Kontaktvorrichtung im Betrieb geschaffen. Die bei einer fehlerhaften Benutzung auf die Füllstücke ausgeübte Kraft wird über seitliche Schultern 65 der Füllstücke 60 aufgenommen, die sich an Leisten 66 der Seitenwände des Gehäusekörpers 13 abstützen (Figur 5 und 6).

Da die Anschlußstücke 10 bzw. 11 mit der Kontaktvorrichtung 1 ständig im Eingriff stehen sollen, weisen die Anschlußstücke Querstege auf, die in entsprechende Hinterschneidungen des Gehäusekörpers 14 eingreifen. Anhand der Figur 6 ist zu erkennen, daß Querstege 63 des Anschlußstückes in entsprechende Nuten 64 des Gehäusekörpers 14 eingreifen, so daß nach dem Vervollständigen des Gehäusekörpers 14 durch ein Endstück 15 bzw. 46 das Anschlußstück fest mit dem Isolierstoffgehäuse 13 des Kontaktmoduls 2 verbunden ist.

Es wäre auch möglich, innerhalb des Isolierstoffgehäuses 13 die Kontaktlamellen 17 und die Füllstücke 60 in umgekehrter Reihenfolge zu montieren, als dies die Figur 5 zeigt. Bei unveränderter Form der Kontaktmodule kann dies von Vorteil sein, um Leistungsschalter mit abweichender Lage der Anschlußvorrichtungen ohne komplizierte Formgebung der Trennkontaktstücke verwenden zu können.

Eine Tragplatte für Leistungsschalter mit anderen als den gezeigten Abständen der Trennkontaktstücke kann dadurch bereitgestellt werden, daß die Durchbrechungen 35 bzw. 35 und 47 in einem entsprechend verändertem Abstand angeordnet werden.

Ein weiteres Ausführungsbeispiel wird nun anhand der Figuren 10 bis 16 erläutert. Wesentlich ist hierbei die Verwendung eines Anschlußstückes 70, dessen Längsrichtung quer zur Betätigungsvorrichtung der Kontaktvorrichtung verläuft. Zur Aufnahme des Anschlußstückes 70 ist ein abgewandeltes Isolierstoffgehäuse 71 vorgesehen, dessen Gehäusekörper 72 eine seitliche Öffnung 73 (Figuren 12 und 16) zur Einführung eines inneren Kontaktteiles 74 des Anschlußstückes 70 besitzt. Ein Endstück 75 des Isolierstoffgehäuses 71 kann mit dem zuvor erläuterten Endstück 15 im wesentlichen übereinstimmen.

Um das Anschlußstück 70 nach seinem Einbau gegen Entfernung aus dem Kontaktmodul zu sichern, ist ein Riegelstück 76 vorgesehen, das an seinem oberen Ende beidseitig überstehende Riegelnasen 77 aufweist. Abgesehen von den Riegelnasen 77 besitzt das Riegelstück 76 eine Höhe und Breite entsprechend einer von dem Schutzkragen 80 des Isolierstoffgehäuses 71 umschlossenen Öffnung. Lage und Gestaltung des Schutzkragens 80 können dem zuvor beschriebenen Ausführungsbeispiel entsprechen. Ferner zeigt die Figur 15 einen Zapfen 81 des Riegelstückes 76, der zum Eingreifen in eine entsprechende Bohrung oder Öffnung 82 des Anschlußstückes 70 (Figuren 10 und 11) dient. Mittels des Zapfens 81 werden auf das Anschlußstück 70 wirkende Zugkräfte auf das Riegelstück 76 übertragen, das in montierter Stellung gegenüber dem Isolierstoffgehäuse 71 im Bereich des Schutzkragens 80 abgestützt ist. Andererseits wird eine Entfernung des Riegelstückes 76 aus dem Isolierstoffgehäuse 71 dadurch verhindert, daß die Nasen 77 in Hinterschneidungen 83 (Figur 13) des Gehäusekörpers 72 Aufnahme finden.

Das Zusammenwirken zwischen Anschlußstück 70, Riegelstück 76 und Isolierstoffgehäuse 71 wird im folgenden insbesondere anhand der Figuren 12 und 16 erläutert. In der Figur 12 ist der Gehäusekörper 72 ohne Endstück 75, jedoch mit eingeführtem Anschlußstück 70 gezeigt. Das Riegelstück 76 ist mit seinem Zapfen 81 in die Öffnung 82 des Anschlußstückes 70 eingeführt. Hierdurch ergibt sich eine bündige Stellung der Oberkante des Anschlußstückes 70 und des Riegelstückes 76. Mit Rücksicht auf die Nasen 77 des Riegelstückes 76 lassen sich jedoch das Anschlußstück 70 und das Riegelstück 76 nur dann zusammenfügen, wenn gemäß der Figur 12 das Anschlußstück 70 zunächst weiter durch die Öffnung 73 hindurchgesteckt wird, als es der endgültigen Lage entspricht. Ausgehend von dieser Zwischenstellung wird nun das Anschlußstück 70 aus dem Gehäusekörper 72 soweit herausgezogen, daß die Oberkante des Anschlußstückes 70 und des Riegelstückes 76 wenigstens bündig mit einer oberen Gehäusekante 84 des Gehäusekörpers 72 steht. In dieser Stellung tauchen die Nasen 77 des Riegelstückes 76 in die Hinterschneidungen 83 (Figur 13) des Gehäusekörpers 72 ein, so daß nun das Riegelstück 76 nicht mehr abgenommen werden kann. Es ergibt sich nun die Stellung der Teile gemäß der Figur 16, welche in der bereits früher beschriebenen Weise die Anbringung des Endstückes 75 gestattet.

In der Figur 16 ist ein aus dem Anschlußstück 70 und dem Isolierstoffgehäuse 71 sowie den nicht dargestellten Kontaktlamellen gebildeter Kontaktmodul 90 in Verbindung mit einer Tragplatte 91 gezeigt. Wie man erkennt, besteht zwischen dem aus dem Gehäusekörper 72 austretenden Anschlußstück 70 und der Tragplatte 91 nur ein verhältnismäßig geringer Abstand. Eine ausreichende Luft- und Kriechstrecke wird an dieser Stelle durch einen etwa parallel zu dem Anschlußstück 70 von dem Schutzkragen 80 abragenden Steg 92 gewährleistet.

Ein in den Figuren 17, 18 und 19 dargestelltes Anschlußstück 100 ist für den Fall vorgesehen, daß die Verbindungen mit einer Sammelschiene oder einer anderen weiterführenden Stromschiene um 90° gegenüber derjenigen Ebene gedreht ist, in der die Kontaktlamellen des Kontaktmoduls das Anschlußstück 100 erfassen. In der Figur 17 ist hierzu gestrichelt ein Isolierstoffgehäuse 101 eines Kontaktmoduls 107 gezeigt, der bis auf die Ausführung des Anschlußstückes etwa dem anhand der Figuren 4, 5 und 6 erläuterten Ausführungsbeispiel entsprechen kann. Das Anschlußstück 100 weist dementsprechend einen inneren Kontaktteil 102 auf, der ebenso zwischen Kontaktlamellen eingreifen kann, wie dies in der Figur 4 gezeigt ist. Ein äußerer Klemmteil 103 des Anschlußstückes 100 ist gegenüber der Ebene des Kontakteils 102 um 90° gedreht. Ein Kreuzungsbereich 104 zwischen den beiden Ebenen ist dabei mit einer Querschnittsverengung derart ausgeführt, daß das Anschlußstück 100 in einer Durchbrechung 106 einer Tragplatte 105 gedreht werden kann. Hierzu zeigt die Figur 18 den Kontaktmodul 107 mit einem Anschlußstück 100 in einer Stellung, in der der Klemmteil 103 bereits durch die Durchbrechung 106 der Tragplatte 105 hindurchgesteckt worden ist, der Kontaktmodul 107 jedoch noch nicht auf der Tragplatte ruht. In der Figur 19 ist die dann vozunehmende Drehung um 90° veranschaulicht. Nach Durchführung dieser Drehung läßt sich der Kontaktmodul 107 auf die Tragplatte 105 aufsetzen. Es ergibt sich dann eine den Figuren 4 und 5 entsprechende Stellung, in der das Isolierstoffgehäuse 101 mit seinem Schutzkragen durch die rechteckige Durchbrechung 106 der Tragplatte 105 hindurchragt.

Im Rahmen der Erfindung können die Anzahl der Kontaktlamellen, die Länge und sonstige Gestaltung der Anschlußstücke in ihrem äußeren Bereich und weitere Merkmale in geeigneter Weise abgewandelt werden. Zur Herstellung des Isolierstoffgehäuses 13, bestehend aus dem Gehäusekörper 14 und dem Endstück 15, können alle geeigneten Isolierwerkstoffe eingesetzt werden, die sich nach Festigkeit, Temperaturbeständigkeit und Formbarkeit für diesen Zweck eignen. Unter Umständen kann es zweckmäßig sein, den Gehäusekörper 14 und das Endstück 15 aus unterschiedlichen Kunststoffen herzustellen.

## Patentansprüche

1. Kontaktvorrichtung (1) zur lösbaren Aufnahme von Trennkontaktstücken (7, 8) der Hauptstrombahnen eines mehrpoligen Schaltgerätes (4), wobei jedem Trennkontaktstück (7, 8) des Schaltgerätes (1) ein ortsfestes Kontaktmodul (2), bestehend aus einem Isolierstoffgehäuse (13) und wenigstens einem Gegenkontaktstück (17), zugeordnet und diese Kontaktmodule (2) an einer Tragplatte (3, 45) befestigt sind, **dadurch** **gekennzeichnet,** daß zur Verbindung der schalterseitigen Trennkontaktstücke (7, 8) und ortsfester Anschlußstücke (10, 11) in dem Isolierstoffgehäuse (13) jedes Kontaktmoduls (2) paarweise einander gegenüberstehend angeordnete brückenartige Kontaktlamellen (17) in einer dem zu übertragenden Strom angepaßten Anzahl vorgesehen sind und daß ein verbleibender Leerraum durch ein die Kontaktlamellen (17) abstützendes Füllstück (60) ausgefüllt ist.

2. Kontaktvorrichtung nach Anspruch 1, **dadurch** **gekennzeichnet,** daß die Kontaktlamellen (17) mit ihrer Längserstreckung in der Betätigungsrichtung der Kontaktvorrichtung angeordnet sind und daß das Füllstück (60) mit der dem Schaltgerät (4) zugewandten Seite der Kontaktlamellen (17) derart wenigstens bündig ausgebildet ist, daß die Einführung eines breiteren als der Anzahl von Kontaktlamellen (17) angepaßten Trennkontaktstückes (7, 8) verhindert ist.

3. Kontaktvorrichtung nach Anspruch 1 oder 2, **dadurch** **gekennzeichnet,** daß das Isolierstoffgehäuse (13) des Kontaktmoduls (2) aus einem an drei aneinandergrenzenden Seiten offenen kastenförmigen Gehäusekörper (14) und einem Endstück (15, 46) besteht, welches die die Öffnungen (16, 20, 21) begrenzenden Seitenwände (24) des kastenförmigen Gehäusekörpers (14) übergreift.

4. Kontaktvorrichtung nach einem der Ansprüche 1 bis 3 , **dadurch gekennzeichnet,** daß das Isolierstoffgehäuse (13) an seiner zur Auflage auf der Tragplatte (3, 45) vorgesehenen Seite einen Schutzkragen (30) besitzt und daß die Tragplatte (3, 45) mit einer dem Schutzkragen (30) angepaßten Durchbrechung (35) versehen ist.

5. Kontaktvorrichtung nach Anspruch 4, **dadurch** **gekennzeichnet,** daß der Schutzkragen (30) durch ein U-förmiges Kragenteilstück (31) des kastenförmigen Gehäusekörpers (13) und ein die offene Seite des Kragenteilstückes (31) abschließenden Wandteil (34) des Endstückes (15) gebildet ist.

6. Kontaktanordnung nach Anspruch 4, **dadurch gekennzeichnet,** daß das Isolierstoffgehäuse (71) eine seitliche Öffnung (73) zum Einführen eines sich quer zur Betätigungsrichtung der Kontaktvorrichtung erstreckenden Anschlußstückes (70) besitzt und daß ein durch den Schutzkragen (80) einführbares Riegelstück (76) mit einem Vorsprung (Zapfen 81) in das Anschlußstück (70) und mit wenigstens einem weiteren Vorsprung (Nase 77) in den Gehäusekörper (72) des Isolierstoffgehäuses (71) derart eingreifend ausgebildet ist, daß bei aufgesetztem Endstück (75) des Isolierstoffgehäuses (71) eine Verschiebung des Anschlußstückes (70) gegenüber dem Riegelstück (76) und eine Verschiebung des Riegelstückes (76) gegenüber dem Isolierstoffgehäuse (71) gesperrt ist.

7. Kontaktvorrichtung nach einem der vorangehenden Ansprüche, **dadurch gekennzeichnet,** daß der Kontaktmodul (2) an seiner zur Auflage auf der Tragplatte (3, 45) bestimmten Seite wenigstens eine Ausnehmung (37) zum Eingreifen einer Kante (40) der Tragplatte (3, 45) besitzt.

8. Kontaktvorrichtung nach Anspruch 7, **dadurch** **gekennzeichnet,** daß an der der Ausnehmung (37) gegenüberliegenden Seite des Isolierstoffgehäuses (13) wenigstens eine Öffnung (23) für ein zum Eingreifen in die Tragplatte (3, 45) vorgesehenes Befestigungselement (41) angeordnet ist.

9. Kontaktvorrichtung nach Anspruch 4, **dadurch** **gekennzeichnet,** daß am Übergang zwischen dem Isolierstoffgehäuse (13) und dem Schutzkragen (30) eine zur Abstützung des Kontaktmoduls (2) auf der Tragplatte (3, 45) dienende Absatzfläche (33) gebildet ist.

10. Kontaktvorrichtung nach Anspruch 7, **dadurch** **gekennzeichnet,** daß an der der Ausnehmung (37) gegenüberliegenden Seite des Kontaktmoduls (2) wenigstens ein Vorsprung (50) angeordnet ist, der in Verbindung mit einer von dem Vorsprung (50) zu übergreifenden weiteren Kante (51) der Tragplatte (45) durch eine Verschiebung eine Verriegelung des Kontaktmoduls (2) gegen Abnahme von der Tragplatte (45) gestattet und daß ein Sperrglied (52, 55) gegen eine Verschiebung des Kontaktmoduls (2) im Sinne der Lösung von der Tragplatte (45) vorgesehen ist.

11. Kontaktvorrichtung nach Anspruch 10, **dadurch** **gekennzeichnet,** daß als Sperrglied wenigstens eine freigeschnittene und biegbare Zunge (55) der aus Blech bestehenden Tragplatte (45) dient.

12. Kontaktvorrichtung nach Anspruch 10, **dadurch** **gekennzeichnet,** daß die Richtung der Verschiebung einander gegenüberstehender Kontaktmodule (2) zur Verriegelung an der Tragplatte (45) gegenläufig im Sinne der Vergrößerung des Abstandes zwischen den Kontaktmodulen (2) gewählt ist und daß als Sperrglied ein zwischen die Kontaktmodule (2) einzubringendes Stützglied (52) dient.

13. Kontaktvorrichtung nach einem der Ansprüche 3 bis 12, **dadurch gekennzeichnet,** daß das Endstück (15, 46) ein zur Auflage auf der Tragplatte (3, 45) bestimmtes Bodenteil (22) und eine rechtwinklig hierzu stehende Mittelwand (24) besitzt, die mit einem zum Einhängen eines Vorhängeschlosses dienenden Langloch (25) versehen ist.

14. Kontaktvorrichtung nach Anspruch 1, **dadurch** **gekennzeichnet**, daß jedes Anschlußstück (100) einen zum Eingreifen zwischen die Kontaktlamellen vorgesehenen Kontaktteil (102) und einen diesem gegenüber um 90° gedrehten Klemmteil (103) besitzen und daß zwischen dem Kontaktteil (102) und dem Klemmteil (103) des Anschlußstückes (100) ein eingeschnürter Übergangsbereich (104) vorgesehen ist, derart, daß nach Einführung des Klemmteiles (103) durch die Durchbrechung der Tragplatte (105) eine Drehung des Kontaktmoduls (106) um 90° vornehmbar ist.

## Claims

1. Contact device (1) for detachably accommodating isolating contact pieces (7, 8) of the main circuits of a multipole switching device (4), each isolating contact piece (7, 8) of the switching device (4) being assigned a fixed contact module (2) comprising an insulating housing (13) and at least one mating contact piece (17), and these contact modules (2) being mounted on a support plate (3, 45), characterised in that bridge-like contact laminations (17) arranged in pairs opposite one another are provided in a number matched to the current to be transmitted in order to connect the switch-side isolating contact pieces (7, 8) and fixed connectors (10, 11) in the insulating housing (13) of each contact module (2) and in that a remaining empty space is filled up by a filler piece (60) supporting the contact laminations (17).

2. Contact device according to Claim 1, characterised in that the contact laminations (17) are arranged with their longitudinal extent in the direction of actuation of the contact device, and in that the filler piece (60) is constructed at least flush with the side of the contact laminations (17) which faces the switching device (4) in such a way that the insertion of a matched isolating contact piece (7, 8) that is wider than the number of contact laminations (17) is prevented.

3. Contact device according to Claim 1 or 2, characterised in that the insulating housing (13) of the contact module (2) comprises a box-shaped housing body (14) that is open on three adjacent sides and an end piece (15, 46) which overlaps the side walls (24) of the box-shaped housing body (14) that bound the openings (16, 20, 21).

4. Contact device according to one of Claims 1 to 3, characterised in that the insulating housing (13) has a protective collar (30) on its side provided for bearing on the support plate (3, 45), and in that the support plate (3, 45) is provided with a through-hole (35) matched to the protective collar (30).

5. Contact device according to Claim 4, characterised in that the protective collar (30) is formed by a U-shaped collar segment (31) of the box-shaped housing body (13) and a wall part (34), sealing the open side of the collar segment (31), of the end piece (15).

6. Contact device according to Claim 4, characterised in that the insulating housing (71) has a lateral opening (73) for the insertion of a connector (70) extending at right angles to the direction of actuation of the contact device, and in that a latching piece (76) that can be inserted through the protective collar (80) is constructed with a projection (peg 81) which engages in the connector (70) in such a way that, and with at least one further projection (lug 77) which engages in the housing body (72) of the insulating housing (71) in such a way that when the end piece (75) of the insulating housing (71) is mounted, displacement of the connector (70) with respect to the latching piece (76) and displacement of the latching piece (76) with respect to the insulating housing (71) are blocked.

7. Contact device according to one of the preceding claims, characterised in that the contact module (2) has on its side intended for bearing on the support plate (3, 45) a recess (37) for engaging an edge (40) of the support plate (3, 45).

8. Contact device according to Claim 7, characterised in that at least one opening (23) for a mounting element (41) provided for engaging in the support plate (3, 45) is arranged on the side of the insulating housing (13) opposite the recess (37).

9. Contact device according to Claim 4, characterised in that a recessed surface (33) serving to support the contact module (2) on the support plate (3, 45) is formed at the transition between the insulating housing (13) and the protective collar (30).

10. Contact device according to Claim 7, characterised in that there is arranged on the side of the contact module (2) opposite the recess (37) at least one projection (50) which, in conjunction with a further edge (51), which is to be overlapped by the projection (50), of the support plate (45), by virtue of a displacement permits the contact module (2) to be locked against removal from the support plate (45), and in that a blocking element (52, 55) is provided against displacement of the contact module (2) for the purpose of release from the support plate (45).

11. Contact device according to Claim 10, characterised in that at least one bendable tongue (55) that has been cut free from the support plate (45) made from sheet metal serves as the blocking element.

12. Contact device according to Claim 10, characterised in that the direction of displacement of mutually opposite contact modules (2) for locking on the support plate (45) is selected to be contrary for the purpose of enlarging the distance between the contact modules (2), and in that a protective element (52) that is to be inserted between the contact modules (2) serves as a blocking element.

13. Contact device according to one of Claims 3 to 12, characterised in that the end piece (15, 46) has a base part (22) intended for bearing on the support plate (3, 45) and a middle wall (24) which is at right angles to said base part and is provided with an elongated hole (25) which serves for suspending a padlock.

14. Contact device according to Claim 1, characterised in that each connector (100) has a contact part (102) provided for engaging between the contact laminations and a clamping part (103) turned through 90° with respect to said contact part, and in that a necked-down transition region (104) is provided between the contact part (102) and the clamping part (103) of the connector (100) in such a way that after insertion of the clamping part (103) through the through-hole of the support plate (105) it is possible to undertake rotation of the contact module (106) by 90°.

## Revendications

1. Dispositif de contact apte à recevoir, de façon amovible, des pièces de contact de coupure (7,8) des voies de courant principales d'un appareil de coupure multipolaire (4), et dans lequel à chaque pièce de contact de coupure (7,8) de l'appareil de commutation (1) est associé un module de contact fixe (2), constitué par un boîtier en matériau isolant (13) et par au moins une pièce de contact antagoniste (17), ces modules de contact (2) étant fixés à une plaque de support (3,45), caractérisé par le fait que pour relier les pièces de contact de coupure (7,8), situées du côté de l'appareil de coupure, à des pièces de raccordement fixes (10,11) il est prévu, dans un boîtier en matériau isolant (13) de chaque module de contact (2), des lamelles de contact en forme d'étriers (17), et qui sont disposées par couples mutuellement en vis-à-vis, et ce en un nombre adapté au courant à transmettre, et qu'un espace vide résiduel est rempli par une pièce de remplissage (60) qui sert d'appui aux lamelles de contact (17).

2. Dispositif de contact suivant la revendication 1, caractérisé par le fait que les lamelles de contact (17) sont disposés de sorte que leur extension longitudinale s'étend dans la direction d'actionnement du dispositif de contact et que la pièce de remplissage (60) est réalisé de manière à se terminer au moins de niveau avec la face des lamelles de contact (18), tournée vers l'appareil de coupure (4), de manière que soit empêchée l'introduction d'une pièce de contact de coupure (7,8) qui serait plus large que le nombre de lamelles de contact (17).

3. Dispositif de contact suivant la revendication 1 ou 2, caractérisé par le fait le boîtier en matériau isolant (13) du module de contact (2) est constitué par un corps (14) en forme de boîte, ouvert sur trois côtés contigus, et par une pièce d'extrémité (15,46), qui s'engage par-dessus les parois latérales (24), qui limitent les ouvertures (16,20,21) du corps en forme de boîte (14), du boîtier.

4. Dispositif de contact suivant l'une des revendications 1 à 3, caractérisé par le fait que le boîtier en matériau isolant (13) possède, sur son côté destiné à s'appiquer sur la plaque de support (3,45), un collet de protection (30), et que la plaque de support (3,45) comporte une ouverture (35) adaptée au collet de protection (30).

5. Dispositif de contact suivant la revendication 4, caractérisé par le fait que le collet de protection (30) est formé par une pièce de collet partielle en forme de U (31) du corps en forme de boîte (13) du boîtier et par un élément de paroi (34) de la pièce d'extrémité (15), qui ferme le côté ouvert de la pièce de collet partielle (31).

6. Dispositif de contact suivant la revendication 4, caractérisé par le fait que le boîtier en matériau isolant (71) possède une ouverture latérale (73) permettant l'introduction d'une pièce de raccordement (70) qui s'étend transversalement par rapport à la direction d'actionnement du dispositif de contact et qu'une pièce de verrouillage (76), qui peut être introduite à travers le collet de protection (80), comporte une partie saillante (téton 81) destiné à s'engager de telle manière dans la pièce de raccordement (70), et au moins une seconde partie saillante (bec 77) destinée à s'engager de telle manière dans le corps (72) du boîtier en matériau isolant (71), que, lorsque la pièce d'extrémité (75) du boîtier en matériau isolant (71) est montée, un déplacement de la pièce de raccordement (70) par rapport à la pièce de verrouillage (76) et un déplacement de l'élément de verrouillage (76) par rapport au boîtier en matériau isolant (71), sont empêchés.

7. Dispositif de contact suivant l'une des revendications précédentes, caractérisé par le fait que le module de contact (2) comporte, sur son côté destiné à s'appliquer sur la plaque de support (3,45), au moins un évidement (37), dans lequel est destiné à s'engager un bord (40) de la plaque de support (3,45).

8. Dispositif de contact suivant la revendication 7, caractérisé par le fait qu'au moins une ouverture (23) pour un élément de fixation (41) destiné à s'engager dans la plaque de support (3,45), est ménagée dans la face du boîtier en matériau isolant (13), située à l'opposé de l'évidement (37).

9. Dispositif de contact suivant la revendication 4, caractérisé par le fait qu'une surface d'appui (33), destinée à supporter le module de contact (2) sur la plaque de support (3,45), est formée au niveau de la transition entre le boîtier en matériau isolant (13) et le collet de protection (30).

10. Dispositif de contact suivant la revendication 7, caractérisé par le fait que sur le côté du module de contact (2), situé à l'opposé de l'évidement (37), est disposé au moins une partie saillante (50), qui, en liaison avec un second bord (51) de la plaque de support (45), au-dessus duquel doit s'engager la partie saillante (50), permet, sous l'effet d'un déplacement, un verrouillage du module de contact (2) contre tout détachement de la plaque de support (45), et qu'il est prévu un organe de blocage (52,55) empêchant un déplacement du module de contact (2), dans le sens de son détachement de la plaque de support (45).

11. Dispositif de contact suivant la revendication 10, caractérisé par le fait qu'il est prévu, comme organe de blocage, au moins une languette flexible, dégagée par découpage, (55) de la plaque de support (45) en tôle.

12. Dispositif de contact suivant la revendication 10, caractérisé par le fait que la direction du déplacement de module de contact (2) réciproquement en vis-à-vis est choisie en sens opposé du verrouillage sur la plaque de support (45), dans le sens d'un accroissement de la distance entre les modules de contact (2), et qu'un élément d'appui (52), à insérer entre les modules de contact (2), est utilisé comme élément de blocage.

13. Dispositif de contact suivant l'une des revendications 3 à 12, caractérisé par le fait que la pièce d'extrémité (15,46) possède un élément de fond (22), destiné à s'appliquer sur la plaque de support (3,45), et une paroi médiane (24), qui est perpendiculaire à cette partie de fond et qui comporte un trou allongé (25) utilisé pour l'accrochage d'un cadenas.

14. Dispositif de contact suivant la revendication 1, caractérisé par le fait que chaque pièce de raccordement (100) possède une partie de contact (102) destinée à s'engager entre des lamelles de contact, et une partie de blocage (103) pivotée de 90° par rapport à la partie de contact, et qu'une zone de transition étranglée (104) est prévue entre la partie de contact (102) et la partie de blocage (103) de l'élément de raccordement (100), de sorte qu'après l'introduction de la partie de blocage (103) dans l'ouverture de la plaque de support (105), on peut faire pivoter le module de contact (106) de 90°.
